# EUROPÄISCHE PATENTSCHRIFT

(11) **EP 0 625 250 B1**
(45) Veröffentlichungstag und Bekanntmachung des Hinweises auf die Patenterteilung: **08.05.1996**
(21) Anmeldenummer: 93903915.2
(22) Anmeldetag: 05.02.1993
(51) Int. Cl.: F16K 1/44

(54) **DOPPELSITZVENTIL**
DOUBLE SEAT VALVE
SOUPAPE A DOUBLE SIEGE

(30) Priorität: 08.02.1992 DE 4203723; 08.02.1992 DE 4203724
(43) Veröffentlichungstag der Anmeldung: 23.11.1994
(73) Patentinhaber: OTTO TUCHENHAGEN GmbH & Co. KG, D-21514 Büchen (DE)
(72) Erfinder: MIETH, Hans, Otto, D-21514 Büchen (DE)
(74) Vertreter: Glaeser, Joachim, Dipl.-Ing.
(86) Internationale Anmeldenummer: EP9300278
(87) Internationale Veröffentlichungsnummer: WO9316307

(56) Entgegenhaltungen:
- DE-A- 2 532 838
- DE-A- 4 118 874
- US-A- 4 436 106

## Beschreibung

Die Erfindung betrifft ein Doppelsitzventil mit zwei seriell angeordneten, relativ zueinander bewegbaren Schließgliedern nach dem Oberbegriff des Anspruchs 1.

Für Doppelsitzventile der einleitend gekennzeichneten Gattung haben sich im Laufe ihrer langjährigen Fortentwicklung eine Reihe von Eigenschaften ergeben, von denen einige unabdingbar und die anderen zumindest wünschenswert sind. Ohne diese Eigenschaften in die eine oder andere Kategorie einzuordnen, seien sie nachstehend kurz umrissen:
- selbsttätige Ableitung der anfallenden Schaltleckage und/oder anderer Leckagen aus dem Leckagehohlraum in die Umgebung des Doppelsitzventils (nachfolgend kurz mit "Drainage" bezeichnet);
- antriebsseitige Demontage der Innenteile des Ventils;
- gehäusefester Sitz (die Ventilsitze können bei der gemeinsamen Demontage des Antriebs und der Ventilinnenteile im Gehäuse verbleiben);
- freie Wahl der Dichtungsmittel der Schließglieder hinsichtlich ihrer Wirkungsrichtung in Bezug auf die zugeordnete Sitzfläche (nachfolgend werden die Dichtungsmittel bei radial dichtenden Schließgliedern mit "radialen Dichtungsmitteln" bezeichnet, im Gegensatz zu axial dichtenden Schließgliedern, sogenannten Sitztellern, mit "axialen Dichtungsmitteln", bei denen diese vorzugsweise in axialer Richtung wirken);
- Sitzreinigungsfähigkeit durch Anliften der Schließglieder;
- leckagearmes oder -freies Schalten;
- Druckentlastung des Leckagehohlraumes beispielsweise beim Anliften der Schließglieder zum Zwecke der Sitzreinigung;
- Erfüllung der Forderung des US-amerikanischen "3A-Standard", daß der Leckagehohlraum mit einem der Nennweite des größten an das Ventil angeschlossenen Rohres entsprechenden Querschnitt drainierbar mit der Atmosphäre verbunden sein soll.

Bei Doppelsitzventilen existieren im wesentlichen zwei Grundbauarten, von denen das einleitend erwähnte einen typischen Vertreter der einen Grundbauart repräsentiert und beispielsweise in der US 4 436 106 A (Figuren 1 und 2) beschrieben ist. Die andere Grundbauart findet sich erstmals in der DE 25 32 838 A1 beschrieben. Weder diese beiden Ventile noch vergleichbare andere Doppelsitzventile dieser Bauarten sind bislang in der Lage, sämtliche vorgenannten Eigenschaften in sich zu vereinigen.

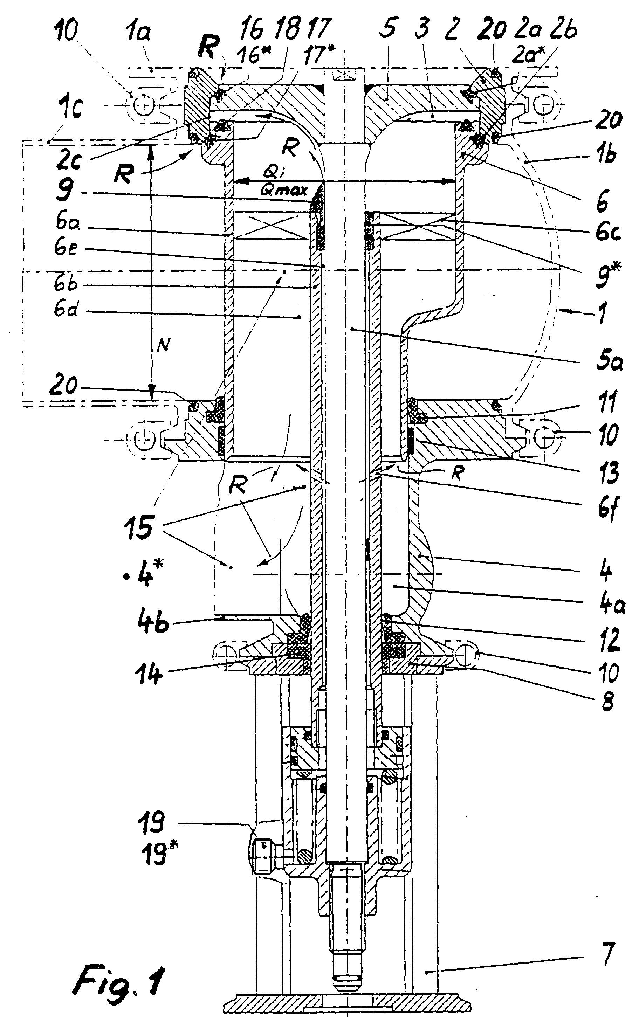

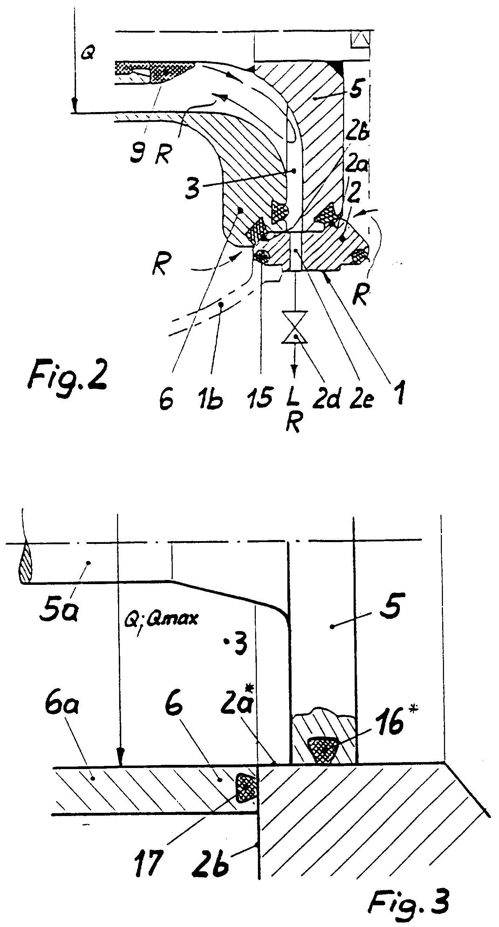

Das aus der US 4 436 106 A (Figuren 1 und 2) bekannte gattungsgemäße Doppelsitzventil mit seinen axial dichtenden Schließgliedern kommt in der dort dargestellten Einbaustellung beispielsweise dann zur Anwendung, wenn das Raumangebot unterhalb des unteren Ventilgehäuseteiles begrenzt ist. Grundsätzlich kann es in jeder beliebigen Einbaulage angeordnet werden, also beispielsweise auch um 180 Grad gedreht, das heißt mit senkrecht nach unten orientierten Ventilstangen oder aber in waagerechter oder schrägliegender Anordnung. Bei abwärts gerichteten Ventilstangen kann die Leckageflüssigkeit unter dem Einfluß der Schwerkraft eigenständig frei abfließen (über den Ringspalt zwischen der Ventilstange und der Hohlstange, Figur 2), oder aber die Leckageflüssigkeit und gegebenenfalls das aus der Umgebung des Ventils über einen weiteren Anschluß zuführbare Reinigungsmittel können problemlos ablaufen (über die hohlgebohrte Ventilstange, Figur 1).

Sofern die Möglichkeit der Teilhubbewegung der Schließglieder vorgesehen ist, sind die Sitzflächen zusätzlich auch sitzreinigungsfähig. In diesem Falle wird das über die freigelegten Sitzflächen in den Leckagehohlraum einströmende Reinigungsmittel in der Regel über den Ringspalt zwischen Hohl- und Ventilstange in die Umgebung des Doppelsitzventils abgeführt. Der zweite Verbindungsweg zum Leckagehohlraum innerhalb der Ventilstange ist dann mit einer extern an das Doppelsitzventil herangeführten Reinigungsleitung verbunden, so daß, wie vorstehend erwähnt, sowohl in der Schließ- als auch in der Offenstellung des Ventils eine Reinigung des Leckagehohlraumes möglich ist.

Das bekannte Doppelsitzventil zeichnet sich im wesentlichen aus durch Drainage des Leckagehohlraums, gehäusefesten Sitz und Öffnungsbewegung und Ausbaubarkeit in Richtung des Antriebes. Der Drainageauslauf erfüllt die 3A-Forderung nicht, da diese konkret so definiert ist, daß der Verbindungsweg zwischen dem Leckagehohlraum und der Umgebung des Doppelsitzventils mit dessen Nenndurchtrittsquerschnitt auszubilden ist. Unter Nenndurchtrittsquerschnitt des Doppelsitzventils wird hier der Querschnitt des an seine Gehäuseanschlüsse unmittelbar anschließbaren größtmöglichen Rohres definiert.

Darüberhinaus gibt es Anwendungsgebiete im Bereich der Verfahrenstechnik, unter anderem den Aseptikbereich, in denen eine einfache Trennung zwischen Produktbereich (Innenraum des Ventilgehäuses) und Umgebung des Doppelsitzventils mittels einer einzigen dynamisch beanspruchten Dichtung nicht erwünscht bzw. nicht tolerierbar ist. In diesen Fällen wird eine absperrbare Sicherheitszone, sozusagen ein absperrbarer Zwischenraum zwischen Produktraum und Umgebung des Doppelsitzventils, gefordert.

Die Fortführung der Leckage und ggf. des Reinigungsmittels erfolgt bei dem Doppelsitzventils gemäß US 44 36 106 über Anschlüsse an den Ventilstangen, die beide die Schaltbewegung des Ventils ausführen. Dies ist nachteilig, da das Anschlußproblem nur mit relativ hohem konstruktivem Aufwand (beispielsweise flexiblen Leitungsverbindungen) und damit mit relativ hohem Kostenaufwand lösbar ist.

Der vorliegenden Erfindung liegt die Aufgabe zugrunde, das Doppelsitzventil der einleitend gekennzeichneten Gattung derart weiterzubilden, daß die Forderung nach einem nicht nur drainierbaren, sondern auch druckentlasteten Leckagehohlraum (3A-Forderung) unter allen denkbaren Betriebsbedingungen erfüllt werden kann. Der Erfindung liegt insbesondere die Aufgabe zugrunde, beim Anliften der Schließglieder zum Zwecke der Sitzreinigung zu verhindern, daß im Leckagehohlraum Druckspitzen auftreten bzw. diese ggf .auf eine tolerierbare Größe zu begrenzen.

Diese Aufgabe wird durch ein Doppelsitzventil mit den Merkmalen des Anspruchs 1 gelöst. Vorteilhafte Ausgestaltungen des vorgeschlagenen Doppelsitzventils sind Gegenstand der abhängigen Ansprüche.

Das Doppelsitzventil der einleitend gekennzeichneten Gattung verfügt in der einen Ausführungsform über einen Verbindungsweg zwischen dem Leckagehohlraum und der Umgebung des Ventils, wobei dieser in dem Ringspalt zwischen Ventilstange und der diese umschließenden Hohlstange ausgebildet ist. In der zweiten Ausführungsform ist darüber hinaus in der inneren Ventilstange ein zweiter Verbindungsweg vorgesehen. Der Verbindungsweg innerhalb der Ventilstange wird vorzugsweise für die Zufuhr von Reinigungsmittel verwendet, da er aufgrund der äußeren Abmessung der Ventilstange in seinem Querschnitt begrenzt ist. In beiden Ausführungsformen ist der Ringspalt zwischen Ventilstange und Hohlstange mit einem relativ kleinen Durchtrittsquerschnitt ausgebildet, und er dient vorzugsweise der Ableitung der Reinigungsflüssigkeit aus dem Leckagehohlraum sowohl im Falle der externen Reinigungsmittelzufuhr (Fig. 1) als auch bei der Sitzreinigung (Fig.2). Im übrigen verdeutlicht das bekannte Doppelsitzventil, daß es bislang allseits anerkanntes Bemessungsprinzip ist, zwecks Minimierung der zu reinigenden Oberflächen den Leckagehohlraum so raumsparend wie möglich zwischen den beiden Schließgliedern auszubilden.

Andererseits hat in der Praxis bei Doppelsitzventilen die sogenannte Sitzreinigung durch Anliften der Schließglieder zunehmend an Bedeutung gewonnen, ohne daß die Konstruktions- und Bemessungskriterien für den Leckagehohlraum und den Drainageablauf revidiert wurden. Es wurde bislang nicht erkannt oder in seiner Bedeutung für die gesamte Sicherheitsphilosophie des Doppelsitzventils unterschätzt, daß es durch Anliften der Schließglieder im Zuge der Sitzreinigung zu einem unzulässigen Druckaufbau im Leckagehohlraum kommen kann, weil der Drainageauslauf die eintretenden Flüssigkeitsmengen nicht ohne Differenzdruck gegenüber dem Ziel des Flüssigkeitstransportes ableiten kann.

Die erfinderische Idee setzt nun bei der Erkenntnis an, daß bei sinnvoller Nutzung der Tatsache, daß die Sitzreinigung durch Anliften stets nur pulsierend, d.h. in gesteuerten kurzzeitigen Takthüben der Schließglieder erfolgt, so daß Reinigungsflüssigkeit zwar mit großer Momentanleistung, aber in begrenzbarem Volumen pro Takt, in den Leckagehohlraum eindringt. Stellt man dieser Flüssigkeitsmenge ein ausreichendes Speichervolumen des Leckagehohlraumes zur Verfügung, ist der Drainageablauf nicht mehr zur simultanen Abführung der Flüssigkeit mit ihrer Zulaufleistung gezwungen und die Druckspitze wird abgebaut, und zwar umso wirkungsvoller je größer das Speichervolumen im Verhältnis zu der durch den Lifttakt definierten Flüssigkeitsmenge ist. In jedem Falle muß das Speichervolumen so groß sein, daß auch bei der größten Flüssigkeitsmenge noch ein Gasraum im Speicher erhalten bleibt. Wird dieses Gasvolumen stark komprimiert, nähert sich der Druckaufbau wieder der im ursprünglichen engen Leckagehohlraum auftretenden Druckspitze, die unbedingt vermieden werden muß.

Die gemäß des ersten erfinderischen Ansatzes vorzusehende Erweiterung des üblichen engen Leckagehohlraumes zu einem im Rahmen der Raumverhältnisse größtmöglichen geschlossenen Speichervolumen ist nach vorstehender Darlegung zwar zum Abbau von Druckspitzen, nicht aber zu ihrer völligen Beseitigung geeignet. Dazu bedarf es gemäß der Erfindung einer weiteren Maßnahme, indem nämlich der bei dem Doppelsitzventil der einleitend gekennzeichneten Gattung antriebsseitig vorhandene Verbindungsweg zwischen dem Leckagehohlraum und der Umgebung des Ventils, der bislang vorzugsweise für die externe Reinigungsmittelzufuhr genutzt wird, als zweite atmosphärische Verbindung des Leckagehohlraumes für die Druckentlastung bereitgestellt wird.

Wird dieser Weg außerdem auch weiterhin als Reinigungsoder Desinfektionsmittelzulauf gebraucht, weil diese Art der Behandlung aus anlagenspezifischen Gründen neben der Sitzreinigung zur mikrobiologischen Kontrolle des Doppelsitzventils für erforderlich gehalten wird, so wird gemäß einer weiteren vorteilhaften Ausgestaltung der Erfindung dieser Weg am Medienzulauf außerhalb des Doppelsitzventils mit einem umschaltbaren Anschluß für Medium und Atmosphäre ausgerüstet.

Die erfindungsgemäße Erweiterung des Leckagehohlraumes zu einem Speicher mit oder ohne steuerbare Entlüftung mit einem kleinen, nur auf das Abblasen der beim Auffüllen des Speichers verdrängten und der beim Leerlaufen des Speichers durch den Drainageablauf nachgesaugten Luft bzw. für den externen Reinigungsmittelzulauf ausgelegten Querschnitt findet ihre funktionelle Grenze bei einer Überfüllung des Speichervolumens. Ein solcher Fall kann in der Praxis eintreten bei Fehlfunktionen der Lifteinrichtung, beispielsweise Versagen des Liftmechanismus, versehentliche Daueransteuerung, Schließhemmung des Schließgliedes durch eingeklemmte Fremdkörper oder auch Verletzen der Dichtungsmittel der Schließglieder. Bei derartigen Ereignissen läuft der Speicher voll, so daß auch der für die Entlüftung genutzte Verbindungsweg (beispielsweise der Ringspalt zwischen innerer Hohlstange und Ventilstange) durch Flüssigkeit beaufschlagt wird, und es steht im Speicher wieder der oben beschriebene Druck an, der sich mit der Sicherheitsphilosophie des Doppelsitzventils nicht verträgt.

Der Entlüftungsanschluß über den eng bemessenen, umfunktionierten externen Reinigungsmittelzulauf kann nur wenig zur Druckentlastung beitragen, wenn er bei Überfüllen des Speichervolumens mit Flüssigkeit statt Luft beaufschlagt ist. Hier greift nun die nächste Stufe der Erfindung, die eine Fortführung des auf den größtmöglichen, die antriebsseitige Demontage der Ventilinnenteile gerade noch zulassenden Durchmesser des Speicherbehälters/Leckagehohlraumes in die Umgebung des Ventils mit vollem Querschnitt vorsieht. Dies gelingt allerdings nicht mit den bisherigen für derartige Verbindungswege angewandten Bemessungs- und Gestaltungsregeln. Gemäß der Erfindung ist in diesem Zusammenhang vorgesehen, daß der Verbindungsweg unmittelbar anschließend an den Leckagehohlraum und in einem Teil seines folgenden weiteren Verlaufs gegenüber seinem übrigen Teil auf einen Durchtrittsquerschnitt erweitert ist, der den Leckagehohlraum raumbildend vergrößert. Dadurch gewinnt der Leckagehohlraum, im Gegensatz zu bisher bekannten Ausgestaltungen, das zur Begrenzung von Druckspitzen notwendige Speichervolumen. Grundsätzlich kann das bereitzustellende Speichervolumen aus dem vorgesehenen erweiterten Durchtrittsquerschnitt in Verbindung mit der zur Verfügung stehenden Ausbaulänge realisiert werden. Wesentlich ist bei der Bemessung, daß die beim Anliften der Schließglieder vom vergrößerten Leckagehohlraum aufzunehmende Flüssigkeit nicht bis in jenen Teil des Verbindungsweges gelangt, der zwar für die Entlüftung noch hinreichenden groß ist, der jedoch aufgrund seines reduzierten Querschnittes bei Flüssigkeitsbeaufschlagung und -führung die drucklose Ableitung der Druckentlastungsleckage nicht sicherstellen kann.

Die wirksamste Vergrößerung des Leckagehohlraums wird dann sichergestellt, wenn der Durchtrittsquerschnitt Q des erweiterten Teiles des Verbindungsweges derart bemessen ist, daß sein Wert Qmax so nah wie möglich an jenen des Nenndurchtrittsquerschnittes N des Doppelsitzventils herangeführt ist (Qmax ≤ N) oder diesen, wo dies konstruktiv möglich ist, sogar übersteigt.

Druckerhöhungen im Leckagehohlraum werden am sichersten vermieden oder am wirksamsten begrenzt, wenn der gesamte Verbindungsweg zwischen dem Leckagehohlraum und der Umgebung des Ventils durchgängig mit dem Durchtrittsquerschnitt Qmax ausgeführt ist.

Ein umgebungsseitiger Verschluß des Verbindungsweges stellt sicher, daß dieser nur dann zur Umgebung hin offen ist, wenn er seine Funktion als Weg für die Druckentlastungsleckage wahrzunehmen hat. In allen anderen Betriebszuständen bleibt er, zum Schutz gegen Eindringen von Verunreinigungen von außen, geschlossen.

Für den Fall, daß eine Druckentlastungsleckage erforderlich ist, deren Entstehen sich allerdings einer planmäßigen Einflußnahme entzieht, ist vorgesehen, daß der Verschluß des Verbindungsweges in Abhängigkeit vom durch Flüssigkeit in Anspruch genommenen Speichervolumen des erweiterten Leckagehohlraumes steuerbar ist.

Bei durchgängiger Ausgestaltung des Verbindungsweges mit einem erweiterten Durchtrittsquerschnitt weist der umgebungsseitige Anschluß an diesen Verbindungsweg entsprechend große Abmessungen auf, die einen Anschluß der für die Fortführung der Druckentlastungsleckage notwendigen Leitungen erschweren. Bei Verwendung eines Ablaufgehäuses, welches mit dem von der Hohlstange durchdrungenen zweiten Ventilgehäuseteil fest verbunden ist und in das die Hohlstange des zweiten Schließgliedes verschieblich eingreift, kann das vorgenannte Anschlußproblem auf außerordentlich vorteilhafte und einfache Weise gelöst werden, da nunmehr der Anschluß ortsfest ausgebildet ist.

Die Hohlstange kann so durchmesservergrößert werden, daß die 3A-Forderung hinreichend erfüllt ist. Das Ablaufgehäuse bildet mit seinem Innenraum gleichzeitig eine absperrbare Sicherheitszone zwischen Produktraum und Umgebung des Doppelsitzventils. Die Hohlstange und damit das mit dieser verbundene Schließglied werden im Bereich ihrer Durchführung durch das zugeordnete Ventilgehäuseteil und das angrenzende Ablaufgehäuse gelagert und geführt. Über die innere Hohlstange bietet sich eine zusätzliche Lagerungs- und Führungsmöglichkeit für das zugeordnete Schließglied, und zwar auf der mit dem anderen Schließglied verbundenen Ventilstange, wobei letztere über einen Ventilantrieb unabhängig angetrieben wird.

Falls bei dem vorgeschlagenen Doppelsitzventil, wie dies eine andere Ausgestaltung vorsieht, die innere Hohlstange bis in einen Ventilantrieb verlängert ist, ist eine umfassende Sitzreinigung aller Sitzbereiche des Doppelsitzventils gegeben, sofern der Ventilantrieb die Fähigkeit zur Erzeugung der jeweils erforderlichen Teiloffenstellung seiner Schließglieder besitzt.

Wird ein zwischen der inneren Hohlstange und der Ventilstange gebildeter, in den Leckagehohlraum ausmündender Ringspalt mit einen Anschluß für die Zufuhr einer Reinigungs- und/oder Spülflüssigkeit ausgestattet, so wird der Ringspalt spül- und reinigungsfähig. Hierbei kann der Anschluß innerhalb oder außerhalb des Ablaufgehäuses ausgebildet sein.

Somit verfügt das vorgeschlagene Doppelsitzventil über zwei Verbindungswege zwischen seiner Umgebung und seinem Leckagehohlraum, nämlich über einen Verbindungsweg für die Entspannungsleckage zwischen Hohlstange und innerer Hohlstange und über einen weiteren Verbindungsweg entweder für die Zufuhr von Reinigungsflüssigkeit aus der Umgebung des Doppelsitzventils innerhalb des Ringspaltes zwischen Ventil- und innerer Hohlstange oder für die Entlüftung des Leckagehohlraumes und des angrenzenden erweiterten Teiles des Verbindungsweges.

Beim vorgeschlagenen Doppelsitzventil können sowohl zwei axial als auch zwei radial dichtende Schließglieder vorgesehen werden, wobei letztere in einer gemeinsamen zylindrischen Sitzfläche dichtend Aufnahme finden; auch eine Kombination aus radialen und axialen Schließgliedern ist möglich.

Falls bei einer Schließgliedkonfiguration aus radial und axial dichtenden Schließgliedern die mit dem axialen Schließglied verbundene Hohlstange innenseits durchmessergleich mit dem zylindrischen Ventilsitz ausgebildet ist und in der Schließstellung des axialen Schließgliedes sein Innendurchmesser und jener des zylindrischen Ventilsitzes bündig ineinander übergehen, findet während der Öffnungsbewegung des radialen Schließgliedes dieses dichtend in der Hohlstange Aufnahme, bevor das axiale Schließglied öffnet. Durch diese Ausgestaltung ist es möglich, das Doppelsitzventil waagerecht anzuordnen und dabei eine einwandfreie und vollständige Drainage des Leckagehohlraumes sicherzustellen.

Ist die letztgenannte Schließgliedkonfiguration nicht gegeben, soll das Doppelsitzventil mit einer der anderern möglichen Konfigurationen dennoch waagerecht eingebaut werden, so ist vorgesehen, daß der Leckagehohlraum über eine im Ventilgehäuse zwischen den Ventilsitzen angeordnete und über ein Absperrventil steuerbare Ablauföffnung mit der Umgebung des Doppelsitzventils verbunden ist. Hierdurch ist es möglich, die sich zwischen den beiden Schließgliedern im Bereich des Leckagehohlraumes bildende Flüssigkeitspfütze in die Umgebung des Doppelsitzventils abzuleiten.

Die vorgenannten Schließgliedkonfigurationen haben selbstverständlich Auswirkungen auf die notwendige Ausgestaltung des Ventilantriebes; für die vorliegende Erfindung sind derartige Überlegungen jedoch nur insoweit relevant, als sie verdeutlichen, daß die mit der Erfindung erzielbaren Vorteile nicht nur auf die in den Figuren dargestellten Schließgliedkonfigurationen beschränkt bleibt.

Werden die Dichtungsmittel der Schließglieder in den vorgenannten Konfigurationsmöglichkeiten mit wenigsten einem radial dichtenden Schließglied derart ausgebildet, daß diese, beginnend mit der Anlage oder dem Eingriff des Schließgliedes am bzw. in das Schließglied und darüber hinaus in der Offenstellung des Ventils, zusätzlich eine Abdichtung der Schließglieder gegeneinander und des Leckagehohlraumes gegenüber dem Innenraum der Ventilgehäuseteile bewirken, dann werden die beim Schalten des Doppelsitzventils auftretenden Schaltleckagen auf ein absolutes Mindestmaß reduziert oder gänzlich verhindert.

Das vorgeschlagene Doppelsitzventil ist in seinen vorstehend beschriebenen Ausführungsformen im Bereich seines Leckagehohlraumes über den Ringspalt zwischen Ventilstange und innerer Hohlstange sowohl in seiner Schließ- als auch in seiner Offenstellung reinigungsfähig. Darüber hinaus läßt sich bei entsprechender Ausgestaltung des Ventilantriebes eine Sitzreinigung realisieren. Dies kann durch Überführung der Schließglieder in Teiloffenstellungen erfolgen; aber es ist auch eine Reinigung zylindrischer Sitzflächen in der Schließstellung des Ventils durch gegenläufiges Auseinanderfahren der Schließglieder mögliche, wobei das notwendige Reinigungsmittel von außerhalb heranzuführen oder in anderen Bereichen des Doppelsitzventils zu "ernten" ist (vgl. Reinigungsverfahren gemäß DE 41 18 874 A1).

Des weiteren kann während der Produktfahrt der Ringspalt über den in der Umgebung des Doppelsitzventils vorgesehenen Anschluß mit einer Sperrflüssigkeit, beispielsweise Wasser, angefüllt werden, so daß ein Eindringen von Produkt, beispielsweise aus einer Schaltleckage oder einem Defekt der Sitzdichtungen, in hohem Maße unwahrscheinlich wird.

Bei einer anderen Ausgestaltung des vorgeschlagenen Doppelsitzventils ist vorgesehen, daß die innere Hohlstange als Spritzdüsen ausgebildete Durchtrittsöffnungen aufweist, die den Ringspalt mit dem Verbindungsweg und/oder mit dem Innenraum des Ablaufgehäuses verbinden. Hierdurch ist eine gezielte Reinigung aller reinigungskritischen Bereiche innerhalb des Leckagehohlraumes, des Verbindungsweges (beispielsweise verbindende Stege zwischen den Hohlstangen) und des Innenraumes des Ablaufgehäuses möglich, und zwar durch die Zufuhr von Reinigungs - und/oder Spülflüssigkeit über den Ringspalt von außerhalb des Doppelsitzventils.

Die notwendige Reinigung des Ablaufgehäuses, in das der Verbindungsweg ausmündet, gestaltet sich dann besonders einfach und wirkungsvoll, wenn zwischen der inneren Hohlstange und einem Gehäuseverschlußteil, das das erste Gehäuse zum Ventilantrieb hin verschließt und durch das die innere Hohlstange hindurchgeführt ist, ein Ringspalt vorgesehen ist, der einerseits in den Inneraum des ersten Gehäuses über eine als Spritzdüse ausgebildete Öffnung ausmündet und der andererseits mit einem ortsfesten Anschluß am Gehäuse des Doppelsitzventils verbunden ist.

Falls auf eine externe Reinigungsmittelzufuhr in den Leckagehohlraum und/oder seine Entlüftung über den Ringspalt zwischen innerer Hohlstange und Ventilstange verzichtet werden kann oder soll, so ist dieser leckageraumseitig mit einer Dichtung zu verschließen. In diesem Falle kann der umgebungsseitige Anschluß an den Ringspalt dazu dienen, Leckagen anzuzeigen und ggf. abzuleiten. Er fungiert somit als Indikator für den Zustand der leckageraumseitigen Abdichtung des Ringspaltes.

Ein Ausführungsbeispiel der vorliegenden Erfindung ist in der Zeichnung dargestellt und wird im folgenden näher erläutert. Es zeigen
- Fig. 1: einen Mittelschnitt durch das vorgeschlagene Doppelsitzventil in einer vorteilhaften Ausgestaltung mit einem mit dem Ventilgehäuseteil verbundenen Ablaufgehäuse, wobei die innere Hohlstange aus letzterem in das zu dem Ventilantrieb führende Laternengehäuse herausgeführt ist;
- Fig. 2: einen Mittelschnitt durch den Sitzbereich einer weiteren Ausgestaltung des vorgeschlagenen Doppelsitzventils gemäß Figur 1 in waagerechter Einbaulage im Zusammenhang mit einem zweiten Leckageauslauf und
- Fig. 3: einen Mittelschnitt durch eine weitere Ausgestaltungen des vorgeschlagenen Doppelsitzventils gemäß Figur 1 im Bereich der Sitzflächen.

Das Doppelsitzventil ist in einer Einbaulage gezeigt (Figur 1), in der die beiden zum Ventilantrieb führenden Ventilstangen senkrecht nach unten orientiert sind. Ein Ventilgehäuse 1 besteht aus einem ersten und einem zweiten Ventilgehäuseteil 1a bzw. 1b. Während das zweite über einen Anschlußstutzen 1c beispielsweise mit einer nicht dargestellten Rohrleitung verbunden ist, ist das erste in der hier gezeigten Ventilanordnung als Tankboden ausgebildet. Das Doppelsitzventil fungiert somit in dem hier vorliegenden Anwendungsfall als Tankauslaufventil. An das zweite Ventilgehäuseteil 1b schließt sich unterhalb ein Ablaufgehäuse 4 mit einem Innenraum 4a und ein letzteren mit der Umgebung des Ventils verbindendes Anschlußrohr 4b an. Im Verbindungsbereich des ersten und des zweiten Ventilgehäuseteils 1a bzw. 1b ist ein Sitzring 2 angeordnet, der über seine erste Sitzfläche 2a in Verbindung mit einem kleineren Schließglied 5 und seine zweite Sitzfläche 2b in Verbindung mit einem größeren Schließglied 6 den Sitzbereich des Doppelsitzventils bildet. Die Schließglieder 5 und 6 sind im vorliegenden Falle axial dichtend ausgebildet und begrenzen zwischen sich einen Leckagehohlraum 3.

Unterhalb des Ablaufgehäuses 4 ist ein Laternengehäuse 7 angeordnet, welches eine Verbindung zu einem nicht dargestellten Ventilantrieb herstellt. Die Verbindung der beiden Ventilgehäuseteile 1a und 1b, jene zwischen dem zweiten Ventilgehäuse 1b und dem Ablaufgehäuse 4 und schließlich jene zwischen letzterem und dem Laternengehäuse 7 werden jeweils über form- und kraftschlüssig wirkende Verbindungsmittel 10 realisiert. Das kleinere Schließglied 5 weist eine Ventilstange 5a auf, die durch das Ablaufgehäuse 4 und das Laternengehäuse 7 hindurchgreift und bis in den Ventilantrieb geführt ist. Das größere Schließglied 6 setzt sich in einer Hohlstange 6a fort, die im Innenraum 4a des Ablaufgehäuses 4 endet und die in der linksseitigen Darstellung der Figur mit einem für ein axiales Schließglied größtmöglichen Innendurchmesser ausgebildet ist. In der rechtsseitigen Darstellung ist die Hohlstange 6a im Anschluß an ein von ihr mit erweitertem Querschnitt gebildetes Speichervolumen auf einen kleineren Durchmesser verjüngt. Die Hohlstange 6a ist im Bereich ihrer Durchdringung des zweiten Ventilgehäuses 1b über eine erste Hohlstangendichtung 11 abgedichtet, die innerhalb eines in das zweite Ventilgehäuse 1b hineingreifenden Stutzens des Ablaufgehäuses 4 angeordnet ist. Ein ebenfalls im Ablaufgehäuse 4 angeordneter erster Führungsring 13 übernimmt dabei die Führung der Hohlstange 6a.

Innerhalb der Hohlstange 6a ist eine über Stege 6c mit dieser verbundene innere Hohlstange 6b ausgebildet, in der die Ventilstange 5a für das kleinere Schließglied 5 angeordnet und geführt ist. Die innere Hohlstange 6b endet einerseits am Leckagehohlraum 3; an dieser Stelle ist ein Düseneinsatz 9 vorgesehen, der in der inneren Hohlstange 6b formschlüssig befestigt ist und der zwei Funktionen erfüllt, nämlich die einer Führung für die Ventilstange 5a innerhalb der inneren Hohlstange 6b und die einer Spritzdüse für das gegebenenfalls in einen Ringspalt 6e zwischen Ventilstange 5a und innerer Hohlstange 6b eingeleitete Reinigungsmittel R. Die innere Hohlstange 6b ist andererseits durch das Ablaufgehäuse 4 hindurchund aus diesem in das Laternengehäuse 7 hineingeführt. Eine innerhalb des Ablaufgehäuses 4 angeordnete zweite Hohlstangendichtung 12 sorgt für ihre notwendige Abdichtung und ein zweiter Führungsring 14 dient ihrer zusätzlichen Führung. Letzterer ist in einem Gehäuseverschlußteil 8 eingebettet, welches über das Laternengehäuse 7 in einer Ausnehmung des Ablaufgehäuses 4 fixiert ist.

Zwischen den Hohlstangen 6a, 6b ist ein vom Leckagehohlraum 3 zum Innenraum 4a des Ablaufgehäuses 4 führender Teil (6d) eines Verbindungsweg 15 vorgesehen, dessen Durchtrittsquerschnitt derart bemessen ist, daß er die 3A-Forderung hinreichend erfüllt.

Die Abdichtung zwischen dem Sitzring 2 und den benachbarten Ventilgehäuseteilen 1a und 1b besorgen Gehäusedichtungen 20; in gleicher Weise wird über eine weitere Gehäusedichtung 20 das in einen nicht näher bezeichneten Anschlußstutzen des zweiten Ventilgehäuses 1b eingreifende Ablaufgehäuse 4 abgedichtet.

Das erste Schließglied 5 ist mit einem axialen Dichtungsmittel 16 ausgestattet, das mit der ersten Sitzfläche 2a zusammenwirkt; im zweiten Schließglied 6 ist das axiale Dichtungsmittel 17 vorgesehen, das mit der zweiten Sitzfläche 2b korrespondiert. Ein im stirnseitigen Bereich des zweiten Schließgliedes 6 angeordnetes weiteres axiales Dichtungsmittel 18 bewirkt während der Öffnungsbewegung und in der Offenstellung des Doppelsitzventils, wenn das unabhängig angetriebene, erste Schließglied 5 in diesem Dichtungsbereich am zweiten Schließglied 6 zur Anlage gekommen ist, eine Abdichtung des Leckagehohlraumes 3 gegenüber dem Innenraum des zweiten Ventilgehäuses 1b.

Sowohl die innere Hohlstange 6b als auch die Ventilstange 5a sind in ein nicht näher bezeichnetes Bauteil hineingeführt, welches in seinem grundsätzlichen Aufbau erstmals in der DE 27 50 833 A1 beschrieben wurde. Es besteht aus verschiedenen Teilen, wobei in dem hier zu erörternden Zusammenhang wesentlich ist, daß der zwischen der inneren Hohlstange 6b und der Ventilstange 5a gebildete Ringspalt 6e innerhalb des Bauteiles eine Verbindung mit seinem Anschluß 19 bzw. 19* aufweist, über den Reinigungsmittel R zu- oder Leckage L abgeführt werden kann. Die Leckanzeige ist ein Indikator für den Zustand einer Dichtung 9*, die vorgesehen wird, wenn auf die Zufuhr von Reinigungsmittel R verzichtet und der Ringspalt 6e leckageraumseitig abgedichtet wird.

Hinsichtlich der weiteren endseitigen Ausgestaltung der inneren Hohlstange 6b existieren drei Möglichkeiten:
1. Die innere Hohlstange 6b endet, wie dargestellt, innerhalb des Laternengehäuses 7. Sie ist dort mit einem Anschluß 19 für die externe Zufuhr eines Reinigungsmittels R ausgestattet.
2. Die innere Hohlstange 6b ist mit dem vorstehend unter Punkt 1) erwähnten Anschluß 19 versehen und darüber hinaus bis in den Ventilantrieb verlängert. Durch diese Ausgestaltung ist es möglich, bei geeigneter Ausbildung des Ventilantriebes das größere Schließglied 6 in ein Teiloffenstellung zu überführen zwecks Durchführung einer Sitzreinigung aus dem zweiten Ventilgehäuseteil 1b.
3. Die innere Hohlstange 6b endet im Bereich des Innenraumes 4a des Ablaufgehäuses 4. In diesem Falle übernimmt sie die Führungs- und Lagerungsfunktion für die Ventilstange 5a, auf der sie sich in Öffnungsrichtung des Ventils abstützt, und sie ermöglicht, falls der Anschluß 19 für die Zufuhr des Reinigungsmittels R vorhanden und im Innenraum 4a des Ablaufgehäuses 4 ausgebildet ist, zusätzlich die Reinigung des Leckagehohlraumes 3, wie unter Punkt 1 beschrieben.

Im Falle einer Sitzreinigung des Doppelsitzventils gelangt über die jeweils freigelegten Sitzflächen des angesteuerten Schließgliedes 5 oder 6 Reinigungsmittel R aus dem zugeordneten Ventilgehäuseteil 1a bzw. 1b in den Leckagehohlraum 3, um von dort über einen Teil 6d eines Verbindungsweges 15 in das Ablaufgehäuse 4 und weiter über das Ablaufrohr 4b in die sich anschließende, nicht dargestellte Rohrleitung abzufließen. Das abströmende Reinigungsmittel reinigt dabei alle den Leckagehohlraum 3, den Teil 6d und den Innenraum 4a des Ablaufgehäuses 4 begrenzenden Oberflächen. Zur Erhöhung der sanitären Sicherheit bei einem derartigen Reinigungsvorgang kann es von Vorteil sein, wenn besonders reinigungskritische Bereiche in den vorgenannten Bereichen zusätzlich einer gezielten Reinigung unterzogen werden (beispielsweise über als Spritzdüsen ausgebildete Öffnungen 6f im Zuge der externen Reinigung des Ringspaltes 6e).

Da unter Umständen in den Ringspalt 6e infolge Schaltleckage oder anderer Ereignisse Produkt gelangen kann, ist es in jedem Falle erforderlich, diesen Ringspalt 6e einer eigenständigen Reinigung und Spülung zu unterziehen oder aber ihn leckageraumseitig abzudichten (Dichtung 9*). Das über die Sitzreinigung aus den Ventilgehäuseteilen 1a bzw. 1b gewinnbare Reinigungsmittel R kann in diesen Ringspalt 6e allenfalls unzureichend eindringen. Eine Ringspaltreinigung erfordert daher zusätzlich eine zwangsweise Zuführung des Reinigungsmittels R aus der Umgebung des Ventils über den vorgenannten Anschluß 19. Bei einer leckageraumseitigen Abdichtung des Ringspaltes 6e übernimmt der Anschluß 19 die Funktion einer Leckanzeige 19*.

Bei waagerechtem oder näherungsweise waagerechtem Einbau des vorgeschlagenen Doppelsitzventils entsteht im untersten Bereich des Leckagehohlraumes 3 zwischen den Schließgliedern 5 und 6 ein Raum, der sich nicht selbsttätig in die Umgebung des Doppelsitzventils entleeren kann. In Figur 2 ist eine Lösung dargestellt, die hier Abhilfe schafft. Dort ist vorgesehen, daß der Leckagehohlraum 3 über eine im Sitzring 2 und dem angrenzenden Ventilgehäuse 1 zwischen den Ventilsitzen 2a,5; 2b,6 angeordnete und über ein Absperrventil 2d steuerbare Ablauföffnung 2e mit der Umgebung des Doppelsitzventils verbunden ist.

In Figur 3 sind das Schließglied 5 radial und das Schließglied 6 axial dichtend ausgeführt. Dabei ist die Hohlstange 6a innenseits durchmessergleich mit dem zylindrischen Ventilsitz 2a* ausgebildet, so daß in der Schließstellung der Schließglieder 5, 6 der Innendurchmesser der Hohlstange 6a und jener der zylindrischen Sitzfläche 2a* bündig ineinander übergehen. Dadurch wird erreicht, daß während der öffnungsbewegung des Schließgliedes 5 dieses dichtend in der Hohlstange 6a mit seinem radialen Dichtungsmittel 16* Aufnahme findet, bevor das Schließglied 6, welches über sein axiales Dichtungsmittel 17 mit der Sitzfläche 2b zusammenwirkt, öffnet. Durch diese Ausführungsform werden einerseits leckagefreies Schalten und andererseits eine vollständige Drainage des Leckagehohlraumes 3, selbst bei waagerechter Einbaulage des Doppelsitzventils, sichergestellt.

Falls beide Schließglieder 5, 6 radial dichtend ausgebildet sind, finden sie in einer gemeinsamen zylindrischen Sitzfläche 2c mit ihren Dichtungsmitteln 16*, 17* dichtend Aufnahme (vgl. Fig.1; Bauteile sind dort bezeichnet aber nicht konkret dargestellt). Das Dichtungsmittel 16* des Schließgliedes 5 wirkt dabei ausschließlich radial dichtend, während das Dichtungsmittel 17* des Schließgliedes 6 sowohl in radialer als auch in axialer, auf das Schließglied 5 weisender Richtung eine Dichtwirkung entfaltet. Das Dichtungsmittel 16* kann allerdings in gleicher Weise wie das Dichtungsmittel 17* ausgebildet werden, so daß beim Zusammenfahren der beiden Schließglieder 5, 6 im Zuge der Öffnungsbewegung des Doppelsitzventils ein absolut spaltfreier Kontakt zwischen den beiden Schließgliedern 5, 6 in diesem Bereich sichergestellt ist.

Im Rahmen des in Figur 1 dargestellten Ausführungsbeispieles des vorgeschlagenen Doppelsitzventils ergibt sich für das größere Schließglied 6 mit seiner Hohlstange 6a und der mit dieser über die Stege 6c verbundenen inneren Hohlstange 6b ein Bauteil, welches in dieser Form im Stand der Technik auf dem Gebiet der Doppelsitzventile kein Vorbild findet. Zum einen ist dieses aus den Teilen 6, 6a, 6b und 6c bestehende Bauteil, für sich gesehen, neu, zum anderen ist seine funktionale Einbettung in die Gesamtanordnung des vorgeschlagenen Doppelsitzventils ebenfalls neu und ermöglicht erst im Rahmen dieser Gesamtanordnung eine besonders vorteilhafte Lösung der der vorliegenden Erfindung zugrunde liegenden Aufgabe.

## Patentansprüche

1. Doppelsitzventil mit zwei seriell angeordneten, relativ zueinander bewegbaren Schließgliedern (5,6), die in der Schließstellung des Ventils das Überströmen von Fluiden von einem ersten Ventilgehäuseteil (1a) in ein zweites (1b) verhindern, und die sowohl in der schließ- als auch in der Offenstellung einen Leckagehohlraum (3) begrenzen, der einen Verbindungsweg (15) mit der Umgebung des Ventils aufweist, wobei das eine, erste Schließglied (5) unabhängig angetrieben ist und bei seiner Öffnungsbewegung am anderen, zweiten Schließglied (6) zur Anlage kommt und, dieses gleichfalls in die Offenstellung überführt und mit konzentrisch ineinander angeordneten Ventilstangen (5a,6a) für die Schließglieder (5,6), die einseitig durch eines der Ventilgehäuseteile (1a,1b) hindurch- und aus diesem herausgeführt sind, wobei die Ventilstange (6a) des zweiten Schließgliedes (6) als Hohlstange ausgebildet ist, **dadurch gekennzeichnet,** daß diese Hohlstange (6a) innenseits einen Speicher (6d) begrenzt, der sich unmittelbar an den Leckagehohlraum (3) anschließt und diesen über das für das Zusammenwirken der Schließglieder (5,6) mechanisch notwendige Maß hinaus um sein Speichervolumen vergrößert, wobei sich der Querschnitt des Leckagehohlraumes (3) im wesentlichen ungeschmälert in einem Durchtrittsquerschnitt (Q) des Speichers (6d) fortsetzt.

2. Doppelsitzventil nach Anspruch 1, **dadurch gekennzeichnet,** daß der Durchtrittsquerschnitt (Q) derart bemessen ist, daß sein Wert (Qmax) so nah wie möglich an jenen des Nenndurchtrittsquerschnittes (N) des Doppelsitzventils herangeführt ist (Qmax ≤ N) oder diesen nach Möglichkeit übersteigt.

3. Doppelsitzventil nach Anspruch 1 oder 2, **dadurch gekennzeichnet,** daß der Speicher (6d) an seinem dem Leckagehohlraum (3) abgewandten Ende über den Verbindungsweg (15) mit der Umgebung des Ventils verbunden ist.

4. Doppelsitzventil nach Anspruch 3, **dadurch gekennzeichnet,** daß der gesamte Verbindungsweg (15) zwischen dem Speicher (6d) und seinem Ende durchgängig mit dem Durchtrittsquerschnitt (Qmax) ausgeführt ist.

5. Doppelsitzventil nach Anspruch 3 oder 4, **dadurch gekennzeichnet,** daß der Verbindungsweg (15) umgebungsseitig verschließbar ist.

6. Doppelsitzventil nach Anspruch 5, **dadurch gekennzeichnet,** daß der Verschluß in Abhängigkeit vom durch Flüssigkeit in Anspruch genommenen Speichervolumen steuerbar ist.

7. Doppelsitzventil nach einem der Ansprüche 3 bis 6, **dadurch gekennzeichnet,** daß das dem Schließglied (6) abgewandte Ende der Hohlstange (6a) mit einem Gehäuse (4*) verbunden ist, welches den von der Hohlstange (6a) gebildeten Speicher (6d) und den sich anschließenden Verbindungsweg (15) aus dem Bereich zwischen dem zweiten Ventilgehäuseteil (1b) und dem Ventilantrieb an die Seite des Doppelsitzventils fortführt.

8. Doppelsitzventil nach einem der Ansprüche 3 bis 6, **dadurch gekennzeichnet,** daß die Hohlstange (6a) in einen Innenraum (4a) eines ersten Gehäuses (4) verschieblich eingreift, welches mit dem von der Hohlstange (6a) durchdrungenen zweiten Ventilgehäuseteil (1b) verbunden ist.

9. Doppelsitzventil nach einem der Ansprüche 1 bis 8, **dadurch gekennzeichnet,** daß innenseits der oder im Anschluß an die Hohlstange (6a) eine mit dieser starr verbundene innere Hohlstange (6b) vorgesehen ist, die sich in Öffnungsrichtung des Ventils mittelbar an der Ventilstange (5a) des ersten Schließgliedes (5) abstützt.

10. Doppelsitzventil nach Anspruch 9, **dadurch gekennzeichnet,** daß die innere Hohlstange (6b) bis in den Ventilantrieb hineingeführt ist.

11. Doppelsitzventil nach Anspruch 9 oder 10, **dadurch gekennzeichnet,** daß die innere Hohlstange (6b) bis an den Leckagehohlraum (3) herangeführt ist und zusammen mit der von ihr umschlossenen Ventilstange (5a) einen Ringspalt (6e) bildet.

12. Doppelsitzventil nach Anspruch 11, **dadurch gekennzeichnet,** daß der Ringspalt (6e) einerseits in den Leckagehohlraum (3) über eine als Spritzdüse ausgebildete Öffnung (9) ausmündet und andererseits mit einem Anschluß (19) für die Zufuhr einer Reinigungsund/oder Spülflüssigkeit (R) ausgestattet ist.

13. Doppelsitzventil nach Anspruch 12, **dadurch gekennzeichnet,** daß in der und/oder in Verbindung mit der inneren Hohlstange (6b) als Spritzdüsen ausgebildete Durchtrittsöffnungen (6f) vorgesehen sind, die den Ringspalt (6e) mit Bereichen des Speichers (6d) bzw. des Verbindungsweges (15) verbinden.

14. Doppelsitzventil nach einem der Ansprüche 10 bis 13, **dadurch gekennzeichnet,** daß zwischen der inneren Hohlstange (6b) und einem Gehäuseverschlußteil (8), das das Ablaufgehäuse (4) zum Ventilantrieb hin verschließt und durch das die innere Hohlstange (6b) hindurchgeführt ist, ein Ringspalt (14) vorgesehen ist, der einerseits in den Innenraum (4a) über eine als Spritzdüse ausgebildete Öffnung (14a) ausmündet und andererseits mit dem Anschluß (19) verbunden ist.

15. Doppelsitzventil nach Anspruch 11, **dadurch gekennzeichnet,** daß der Ringspalt (6e) an seiner Ausmündungsstelle in den Leckagehohlraum (3) mit einer Dichtung (9*) verschlossen und andererseits mit einem Anschluß (19*) für die Anzeige und Ableitung von Leckageflüssigkeit (L) ausgestattet ist.

16. Doppelsitzventil nach einem der Ansprüche 1 bis 14, **dadurch gekennzeichnet,** daß beide Schließglieder (5,6) jeweils mit einem axialen Dichtungsmittel (16 bzw. 17) ausgebildet sind, wobei letzteren jeweils ein Sitzfläche (2a bzw. 2b) zugeordnet ist.

17. Doppelsitzventil nach einem der Ansprüche 1 bis 15, **dadurch gekennzeichnet,** daß beide Schließglieder (5,6) mit jeweils einem radialen Dichtungsmittel (16* bzw. 17*) ausgebildet sind, die in der Schließstellung des Ventils in einer gemeinsamen zylindrischen Sitzfläche (2c) dichtend Aufnahme finden.

18. Doppelsitzventil nach einem der Ansprüche 1 bis 15, **dadurch gekennzeichnet,** daß das erste Schließglied (5) mit dem radialen Dichtungsmittel (16*) und das zweite Schließglied (6) mit dem axialen Dichtungsmittel (17) ausgebildet sind, wobei das radiale Dichtungsmittel (16*) in der Schließstellung des Ventils in einer zylindrischen Sitzfläche (2a*) dichtend Aufnahme findet und das axiale Dichtungsmittel (17) der Sitzfläche (2b) zugeordnet ist.

19. Doppelsitzventil nach Anspruch 18, **dadurch gekennzeichnet,** daß die Hohlstange (6a) innenseits durchmessergleich mit der zylindrischen Sitzfläche (2a*) ausgebildet ist, daß in der Schließstellung des Schließgliedes (6) der Innendurchmesser der Hohlstange (6a) und jener der zylindrischen Sitzfläche (2a*) bündig ineinander übergehen, und daß während der Öffnungsbewegung des Schließgliedes (5) dieses dichtend in der Hohlstange (6a) Aufnahme findet, bevor das Schließglied (6) öffnet.

20. Doppelsitzventil nach einem der Ansprüche 16 bis 19, **dadurch gekennzeichnet,** daß die Dichtungsmittel (17;16*,17*), beginnend mit der Anlage oder dem Eingriff des ersten Schließgliedes (5) am zweiten bzw. in das zweite Schließglied (6) und darüber hinaus in der Offenstellung des Ventils, zusätzlich eine Abdichtung der Schließglieder (5,6) gegeneinander und des Leckagehohlraumes (3) gegenüber dem Innenraum der Ventilgehäuseteile (1a,1b) bewirken.

21. Doppelsitzventil nach einem der Ansprüche 1 bis 19, **dadurch gekennzeichnet,** daß der Leckagehohlraum (3) über eine im Ventilgehäuse (1) zwischen den Ventilsitzen (2a,5; 2b,6 oder 2a*,5; 2b,6 oder 2c,5; 2c,6) angeordnete und über ein Absperrventil (2d) steuerbare Ablauföffnung (2e) mit der Umgebung des Doppelsitzventils verbunden ist.

## Claims

1. A double seat valve with two serially mounted closure elements (5, 6) movable relative to each other which prevent overflow of fluids from a first valve housing element (1a) to a second (1b) when the valve is in the closed position and which in both the closed and the open position delimit a leakage cavity (3) having a connection path (15) to the environment of the valve, with the one, the first closure element (5) being actuated independently which during its opening movement comes to rest against the other, the second closure element (6) and also transfers the latter to the open position, and with valve rods (5a, 6a) which are mounted concentrically one within the other for the closure elements (5, 6) and which extend through and beyond one of the valve housing elements (1a, 1b) on one side with the valve rod (6a) of the second closure element (6) being designed as a hollow rod, **wherein** this hollow rod (6a) has on the inside a reservoir (6d) immediately adjoining the leakage cavity (3) and increases the latter by the amount of its storage volume beyond the extent mechanically necessary for the combined action of the closure elements (5, 6), the cross section of the leakage cavity (3) being continued more or less with the same diameter in an aperture cross-section (Q) of the reservoir (6d).

2. A double seat valve as recited in Claim 1, **wherein** the aperture cross section (Q) is so dimensioned that its value (Qmax) approaches as closely as possible that of the rated aperture cross section (N) of the double seat valve (Qmax ≤ N) or if possible exceeds this value.

3. A double seat valve as recited in Claim 1 or 2, **wherein** the reservoir (6d) in its end facing away from the leakage cavity (3) is connected to the environment of the valve by means of a connecting path (15).

4. A double seat valve as recited in Claim 3, **wherein** the entire connecting path (15) between the reservoir (6d) and its end is designed to interconnect with the aperture cross section (Qmax).

5. A double seat valve as recited in Claim 3 to 4, **wherein** the connecting path (15) is closable to the environment side.

6. A double seat valve as recited in Claim 5, **wherein** the closure can be actuated as a function of the storage volume occupied by liquid.

7. A double seat valve as recited in one of Claims 3 to 6, **wherein** the end of the hollow rod (6a) facing away from the closure element (6) is connected to a housing (4*) which continues the reservoir (6d) and the adjoining connecting path (15) formed by the hollow rod (6a) from the area between the second valve housing element (1b) and the valve drive on the side of the double seat valve.

8. A double seat valve as recited in one of Claims 3 to 6, **wherein** the hollow rod (6a) extends movably into an inner space (4a) of a first housing (4) that is connected to the second valve housing element (1b) through which the hollow rod (6a) extends.

9. A double seat valve as recited in one of Claims 1 to 8, **wherein** inside or adjacent to the hollow rod (6a) is provided an inner hollow rod (6b) rigidly connected to the hollow rod (6a) that in opening direction of the valve rests indirectly on the valve rod (5a) of the first closure element (5).

10. A double seat valve as recited in Claim 9, **wherein** the inner hollow rod (6b) extends into the valve drive.

11. A double seat valve as recited in claims 9 or 10, **wherein** the inner hollow rod (6b) extends to the leakage cavity (3) and forms an annular gap (6e) together with the valve rod (5a) which it surrounds.

12. A double seat valve as recited in Claim 11, **wherein** the annular gap (6e) on one side ends in the leakage cavity (3) by way of an opening in the form of a spray nozzle (9) and on the other side is provided with a connection (19) for delivery of a cleaning and/or rinsing liquid (R).

13. A double seat valve as recited in Claim 12, **wherein** aperture openings (6f) in the form of spray nozzles which connect the annular gap (6e) to areas of the reservoir (6d) or the connecting path (15) are provided in and/or in conjunction with the inner hollow rod (6b).

14. A double seat valve as recited in one of Claims 10 to 13, **wherein** an annular gap (14), which on one side ends in the inner space (4a) by way of an opening in the form of a spray nozzle (14a) and on the other side is connected to the connection (19), is provided between the inner hollow rod (6b) and a housing closure element (8) that closes off the outlet housing (4) in the direction of the valve drive and extends through the inner hollow rod (6b).

15. Double seat valve as recited in Claim 11, **wherein** the annular gap (6e) is closed at its outlet to the leakage cavity (3) with a sealing (9*) and on the other side is provided with a connection (19*) for indication and drainage of leakage fluid (L).

16. Double seat valve as recited in one of Claims 1 to 14, **wherein** both closure elements (5, 6) are designed with an axial sealing means each (16 and 17 respectively), with a seat surface each (2a and 2b respectively) being assigned to the latter.

17. Double seat valve as recited in one of Claims 1 to 15, **wherein** both closure elements (5, 6) are designed with a radial sealing means each (16* and 17* respectively) which in the closed position of the valve are held tightly in a common cylindrical seat surface (2c).

18. Double seat valve as recited in one of Claims 1 to 15, **wherein** the first closure element (5) is designed with the radial sealing means (16*) and the second closure element is designed with the axial sealing means (17), with the radial sealing means (16*) being held tightly in a cylindrical seat surface (2a*) in the closed position of the valve, and the axial sealing means (17) being assigned to the seat surface (2b).

19. Double seat valve as recited in Claim 18, **wherein** the hollow rod (6a) has the same inner diameter as the cylindrical seat surface (2a*), that in the closed position of the closure element (6), the inner diameter of the hollow rod (6a) and the inner diameter of the cylindrical seat surface (2a*) are flush and that during the opening movement of the closure element (5), the latter is held tightly in the hollow rod (6a) before the closure element (6) opens.

20. Double seat valve as recited in one of Claims 16 to 19, **wherein** the sealing means (17, 16*, 17*), beginning with the joining or the engagement of the first closure element (5) to the or into the second closure element (6) and beyond in the open position of the valve also cause a sealing of the closure elements (5, 6) from each other and of the leakage cavity (3) from the inner space of the valve housing parts (1a, 1b).

21. Double seat valve as recited in one of Claims 1 to 19, **wherein** the leakage cavity (3) is connected with the environment of the double seat valve by way of an outlet opening (2e) situated in the valve housing (1) between the valve seats (2a, 5; 2b, 6 or 2a*, 5; 2b, 6 or 2c, 5; 2c, 6) and is controllable by way of a shutoff valve (2d).

## Revendications

1. Soupape à double siège comportant deux organes de fermeture (5, 6), mobiles l'un par rapport à l'autre et disposés en série, qui, en position de fermeture de la soupape, empêchent le débordement de fluides depuis une première partie de carter (1a) dans une deuxième (1b), et qui, aussi bien en position de fermeture qu'en position d'ouverture, délimitent une cavité de fuite (3), qui présente une voie de liaison (15) avec l'environnement de la soupape,
étant entendu qu'un premier organe de fermeture (5), actionné de façon indépendante, vient, lors de son mouvement d'ouverture, au contact du deuxième organe de fermeture (6), et entraîne, en même temps, celui-ci en position d'ouverture,
et comportant des tiges de soupape (5a, 6a), disposées concentriquement l'une dans l'autre, pour les organes de fermeture (5, 6), tiges qui traversent, d'un côté, l'une des parties de carter (1a, 1b) et ressortent de celle-ci, la tige de soupape (6a) du deuxième organe de fermeture (6) étant réalisée sous la forme d'une tige creuse,
caractérisée en ce que cette tige de soupape creuse (6a) délimite, par son côté intérieur, un réservoir (6d) qui se raccorde directement à la cavité de fuite (3) et augmente celle-ci de son propre volume au-delà de la quantité nécessaire mécaniquement pour l'action coordonnée des organes de fermeture (5, 6), la section de la cavité de fuite (3) se continuant, essentiellement sans diminution, dans une section de passage (Q) du réservoir (6d).

2. Soupape à double siège suivant la revendication 1, caractérisée en ce que la section de passage (Q) est prévue de telle façon que sa valeur (Qmax) s'approche autant que possible de celle de la section de passage nominale (N) de la soupape à double siège (Qmax ≤ N), ou, si possible, la dépasse.

3. Soupape à double siège suivant la revendication 1 ou la revendication 2, caractérisée en ce que le réservoir (6d), à son extrémité opposée à la cavité de fuite (3) est relié, par la voie de liaison (15), à l'environnement de la soupape.

4. Soupape à double siège suivant la revendication 3, caractérisée en ce que la totalité de la voie de liaison (15), située entre le réservoir (6d) et son extrémité, est réalisée de façon à pouvoir être traversée avec la section de passage (Qmax).

5. Soupape à double siège suivant la revendication 3 ou la revendication 4, caractérisée en ce que la voie de liaison (15) peut être fermée côté environnement.

6. Soupape à double siège suivant la revendication 5, caractérisée en ce que la fermeture peut être commandée en fonction du volume de réservoir occupé par le liquide.

7. Soupape à double siège suivant l'une des revendications 3 à 6, caractérisée en ce que l'extrémité de la tige de soupape (6a) opposée à l'organe de fermeture (6) est reliée à un carter (4*) qui prolonge le réservoir (6d), formé par la tige de soupape (6a), et la voie de liaison (15) qui s'y raccorde, et va de la zone située entre la deuxième partie de carter de soupape (1b) et l'entraînement de soupape au côté de la soupape à double siège.

8. Soupape à double siège suivant l'une des revendications 3 à 6, caractérisée en ce que la tige de soupape (6a) s'engage par coulissement dans un volume intérieur (4a) d'un premier carter (4), qui est relié à la deuxième partie de carter de soupape (1b) traversé par la tige de soupape (6a).

9. Soupape à double siège suivant l'une des revendications 1 à 8, caractérisée en ce que, sur le côté à l'intérieur de la tige de soupape creuse (6a), ou raccordée à elle, il est prévu une tige de soupape intérieure creuse (6b), reliée de façon rigide à cette dernière et qui s'appuie, dans le sens de l'ouverture de la soupape, indirectement sur la tige de soupape (5a) du premier organe de fermeture (5).

10. Soupape à double siège suivant la revendication 9, caractérisée en ce que la tige de soupape intérieure creuse (6b) est guidée jusqu'à l'intérieur de l'entraînement de soupape.

11. Soupape à double siège suivant la revendication 9 ou la revendication 10, caractérisée en ce que la tige de soupape intérieure creuse (6b) est guidée jusqu'à la cavité de fuites (3) et forme, avec la tige de soupape (5a) qu'elle entoure, un interstice annulaire (6e).

12. Soupape à double siège suivant la revendication 11, caractérisée en ce que l'interstice annulaire (6e), d'un côté, débouche, par une ouverture (9) réalisée sous la forme d'une buse de pulvérisation, dans la cavité de fuites (3) , et de l'autre côté, est réalisée avec un raccord (19) pour l'alimentation en un liquide de nettoyage et/ou d'arrosage (R).

13. Soupape à double siège suivant la revendication 12, caractérisée en ce que, dans la tige de soupape intérieure creuse (6b), et/ou reliées à elle, sont prévues des ouvertures de passage (6f), réalisées sous la forme de buses de pulvérisation, qui relient l'interstice annulaire (6e) à des zones du réservoir (6d) ou de la voie de liaison (15).

14. Soupape à double siège suivant l'une des revendications 10 à 13, caractérisée en ce qu'entre la tige de soupape intérieure creuse (6b) et une pièce de fermeture du carter (8), qui ferme le carter d'écoulement (4) vers l'entraînement de la soupape et qui est traversée par la tige de soupape intérieure (6b), il est prévu un interstice annulaire (14) qui, d'un côté, débouche dans le volume intérieur (4a) par une ouverture (14a) réalisée sous la forme d'une buse de pulvérisation, et, de l'autre côté, est relié au raccord (19).

15. Soupape à double siège suivant la revendication 11, caractérisée en ce que l'interstice annulaire (6e), au point où il débouche dans la cavité de fuites (3) , est fermé par un joint d'étanchéité (9*) et, de l'autre côté, est réalisé avec un raccord (19*) servant d'indicateur et d'évacuation de liquide de fuite (L).

16. Soupape à double siège suivant l'une des revendications 1 à 14, caractérisée en ce que les deux organes de fermeture (5, 6) sont chacun réalisés avec un moyen axial d'étanchéité (16 et 17), une surface de siège (respectivement 2a et 2b) étant associée à chacun de ceux-ci.

17. Soupape à double siège suivant l'une des revendications 1 à 15, caractérisée en ce que les deux organes de fermeture (5, 6) sont chacun réalisés avec un moyen radial d'étanchéité (16* et 17*), ceux-ci, en position de fermeture de la soupape, étant reçus de façon étanche dans une surface de siège cylindrique commune (2c).

18. Soupape à double siège suivant l'une des revendications 1 à 15, caractérisée en ce que le premier organe de fermeture (5) est réalisé avec le moyen d'étanchéité radial (16*) et que le deuxième organe de fermeture (6) est réalisé avec le moyen d'étanchéité axial (17), le moyen d'étanchéité radial (16*) étant reçu, en position de fermeture de la soupape, de façon étanche, dans une surface de siège cylindrique (2a*), et le moyen d'étanchéité axial (17) étant associé à la surface de siège (2b).

19. Soupape à double siège suivant la revendication 18, caractérisée en ce que la tige de soupape creuse (6a) est réalisée, intérieurement, avec le même diamètre que la surface de siège cylindrique (2a*), en ce que, dans la position de fermeture de l'organe de fermeture (6), le diamètre intérieur de la tige de soupape (6a) et celui de la surface de siège cylindrique (2a*) se raccordent étroitement, et en ce que, pendant le mouvement d'ouverture de l'organe de fermeture (5), celui-ci est reçu, de façon étanche, dans la tige de soupape (6a) avant que s'ouvre l'organe de fermeture (6).

20. Soupape à double siège suivant l'une des revendications 16 à 19, caractérisée en ce que les moyens d'étanchéité (17; 16*,17*), en commençant par le contact ou l'engagement du premier organe de fermeture (5) respectivement sur ou dans le deuxième organe de fermeture (6) et, ensuite, dans la position d'ouverture de la soupape, produisent, en plus, une étanchéité des organes de fermeture (5, 6) l'un par rapport à l'autre et celle de la cavité de fuites (3) par rapport au volume intérieur des parties de carter de soupape (1a, 1b).

21. Soupape à double siège suivant l'une des revendications 1 à 19, caractérisée en ce que la cavité de fuites (3) est reliée à l'environnement de la soupape à double siège par une ouverture d'écoulement (2e), qui est disposée dans le carter de soupape (1), entre les sièges de soupape (2a,5; 2b, 6 ou 2a*,5; 2b, 6 ou 2c,5; 2c, 6), et que l'on peut commander par une soupape d'arrêt (2d).
